Europäisches Patentamt

(19) European Patent Office

Office européen des brevets

(11) **EP 0 734 133 A1**

(12) # DEMANDE DE BREVET EUROPEEN

(43) Date de publication:
25.09.1996 Bulletin 1996/39

(51) Int. Cl.[6]: **H04L 5/06**, H04L 27/01

(21) Numéro de dépôt: 96200684.7

(22) Date de dépôt: **13.03.1996**

(84) Etats contractants désignés:
**DE FR GB**

(30) Priorité: **22.03.1995 FR 9503350**

(71) Demandeurs:
• **LABORATOIRES D'ELECTRONIQUE PHILIPS S.A.S.**
**94450 Limeil-Brévannes (FR)**
Etats contractants désignés:
**FR**

• **PHILIPS ELECTRONICS N.V.**
**5621 BA  Eindhoven (NL)**
Etats contractants désignés:
**DE GB**

(72) Inventeurs:
• **Brajal, Américo**
**75008 Paris (FR)**
• **Chouly, Antoine**
**75008 Paris (FR)**

(74) Mandataire: **Landousy, Christian**
**Société Civile S.P.I.D.**
**156, Boulevard Haussmann**
**75008 Paris (FR)**

(54) **Système dégalisation pour récepteur multiporteur**

(57) Système de transmission comprenant des moyens (14) de modulation à multiporteuses et des moyens (24) de démodulation à multiporteuses comportant un égaliseur semi-fixe ($64_1$) cascadé avec un égaliseur adaptatif ($64_2$). L'égaliseur semi-fixe égalise les imperfections relativement stables ou lentement et/ou faiblement évolutives dues au canal et l'égaliseur adaptatif égalise les imperfections dues aux bruits de transmission. L'invention concerne également un procédé pour déterminer les caractéristiques de l'égaliseur semi-fixe.

Application: Transmissions sur lignes téléphoniques, par voies hertziennes.

FIG. 3

## Description

L'invention concerne un système de transmission numérique comportant un émetteur et au moins un récepteur qui communiquent entre eux à travers un canal, l'émetteur émettant des si-aux à multiporteuses, le récepteur comportant des moyens d'égalisation ayant au moins un égaliseur et des moyens de calcul pour mettre à jour des coefficients de pondération de l'égaliseur.

Elle concerne également un récepteur mis en oeuvre dans un tel système et un procédé de mise à jour des coefficients de pondération.

La technique de transmission à l'aide de signaux à multiporteuses est connue comme étant très efficace pour transmettre des données sur des canaux de diffusion tels que ceux utilisant des voies hertziennes ou des liaisons point à point par câble. La technique à multiporteuses s'avère être bien supérieure à la technique à monoporteuse en ce qui concerne l'égalisation des signaux reçus, en particulier pour des canaux ayant une réponse impulsionnelle longue. En effet, on peut remplacer un dispositif à monoporteuse utilisant, dans le domaine temporel, un égaliseur très complexe par un dispositif à multiporteuses utilisant un égaliseur ayant seulement un seul coefficient de pondération opérant pour chaque porteuse dans le domaine fréquentiel. Néanmoins, lorsque la réponse impulsionnelle du canal devient vraiment très longue, cette technique d'égalisation du dispositif à multiporteuses s'avère être insuffisante. Il faut alors envisager une égalisation dans le domaine temporel.

On connaît le document US 5 285 474 qui décrit une méthode pour égaliser un signal à multiporteuses dans un système de transmission à multiporteuses. Or il peut arriver que pour un canal fortement distordu la réponse impulsionnelle du canal soit très longue ce qui nécessite d'utiliser un égaliseur ayant un nombre élevé de coefficients. Le but de ce document est de définir un canal équivalent formé par le canal et l'égaliseur, ayant une réponse impulsionnelle réduite, de façon à limiter la taille de l'égaliseur afin de réduire les moyens matériels (en quantité et donc en coût) nécessaires pour effectuer l'égalisation. Le procédé selon ce document détermine les paramètres de l'égaliseur en comparant des échantillons d'une séquence reçue avec des échantillons d'une séquence d'apprentissage stockée localement. Le procédé détermine, par approximations successives, à la fois la réponse impulsionnelle réduite du canal cible recherché et la réponse impulsionnelle de l'égaliseur qui, mis en cascade avec le canal réel, forme une combinaison qui approche le canal cible le mieux possible. Le procédé détermine pour cela la fonction de transfert du canal cible dans le domaine fréquentiel, la transforme en réponse impulsionnelle dans le domaine temporel en appliquant une transformée de Fourier inverse, applique un fenêtrage et déduit des coefficients de pondération qui sont chargés dans l'égaliseur. De la même manière, le procédé adapte la réponse impulsionnelle du canal cible d'après les coefficients de l'égaliseur. Ainsi, les caractéristiques du canal cible et celles de l'égaliseur sont adaptées les unes aux autres par récurrence en fonction de la convergence desdites caractéristiques.

Cette technique peut être utilisée pour obtenir une réponse impulsionnelle réduite quel que soit le canal concerné. Ce procédé d'égalisation est très complexe et nécessite de multiples étapes de calcul pour obtenir les coefficients permettant de corriger adaptativement des imperfections dues à tout canal ayant une réponse impulsionnelle longue. Ce procédé de calcul opère en boucle pour déterminer simultanément les caractéristiques de l'égaliseur et celles d'un canal cible. Or la durée de convergence d'un tel procédé est longue, procédé qui par ailleurs peut être l'objet d'instabilités.

Le but de l'invention est donc de simplifier la technique d'égalisation opérant sur des signaux à multiporteuses, même en cas de réponses impulsionnelles longues, en tenant compte des spécificités du canal sans restreindre le procédé à un canal cible déterminé.

Ce but est atteint avec un égaliseur semi-fixe pour lequel les moyens de calcul estiment une fonction de transfert inverse d'une fonction de transfert caractérisant le canal, les moyens de calcul déterminant, à partir de la fonction de transfert inverse, les coefficients de pondération pour mettre à jour, de temps à autre, l'égaliseur semi-fixe.

L'égaliseur semi-fixe est prévu pour corriger les imperfections relativement stables ou lentement et/ou faiblement évolutives d'un canal. Un tel canal se rencontre par exemple sur des câbles, des lignes téléphoniques, par exemple des paires torsadées. Il peut également s'agir de voies hertziennes. Plus généralement de tels canaux existent pour des transmissions numériques entre points fixes.

Pour suivre les évolutions du canal qui ne peuvent pas être prises en compte par l'égaliseur semi-fixe et pour s'adapter au bruit du canal, on ajoute dans les moyens d'égalisation, après l'égaliseur semi-fixe, un égaliseur adaptatif qui égalise les imperfections de transmission créées par un bruit superposé. Ainsi on dissocie l'égalisation effectuée pour compenser les imperfections dues au canal de l'égalisation effectuée pour compenser les imperfections dues au bruit superposé. Les caractéristiques des deux égaliseurs sont ainsi déterminées indépendamment les unes des autres.

On peut prévoir de limiter la longueur de la réponse impulsionnelle de l'égaliseur semi-fixe afin de limiter sa complexité. Pour assurer l'égalisation sur une durée prédéterminée, les moyens de calcul sélectionnent les coefficients de pondération en effectuant une opération de fenêtrage de la fonction de transfert inverse pour contenir temporellement des défauts d'égalisation sur une durée réduite prédéterminée. Le fenêtrage peut réaliser en outre une opération de lissage de la réponse impulsionnelle.

Pour permettre au récepteur de déterminer la fonction de transfert inverse du canal, l'émetteur émet des séquences qui peuvent être des séquences d'initialisation ou des séquences de contrôle. De cette manière, les moyens de calcul stockent des répliques de séquences d'initialisation et/ou de séquences de contrôle ayant une composition connue à l'avance émises par l'émetteur, les moyens de calcul estimant la fonction de transfert du canal en comparant des séquences reçues avec les répliques stockées.

Une séquence d'initialisation est une séquence émise au début d'une transmission lors de la connexion entre l'émetteur et le récepteur. Elle permet au récepteur de se synchroniser sur l'émetteur et de déterminer les caractéristiques du canal.

Une séquence de contrôle est une séquence qui est émise de temps à autre par l'émetteur. En effet, il peut par exemple s'agir d'un émetteur opérant avec plusieurs récepteurs. Lorsqu'un récepteur non encore connecté entre en communication avec l'émetteur, comme ceci peut intervenir à tout moment, l'émetteur doit transmettre, de temps à autre, préférentiellement périodiquement, une ou des séquences de contrôle qui permettent au récepteur de se synchroniser sur l'émetteur et de déterminer les caractéristiques du canal.

Préférentiellement les séquences sont émises selon un format dit à répartition multiplexée de fréquences orthogonales comportant un intervalle de garde, la durée réduite étant celle de l'intervalle de garde.

L'invention concerne également un procédé mis en oeuvre dans un système de transmission numérique comportant un émetteur et au moins un récepteur qui communiquent entre eux à travers un canal, l'émetteur émettant des signaux à multiporteuses, le récepteur comportant des moyens d'égalisation ayant au moins un égaliseur et des moyens de calcul pour mettre à jour des coefficients de pondération de l'égaliseur caractérisé en ce que le procédé comprend les étapes suivantes:

- initialiser l'égaliseur pour qu'il transfère, sans changements, un signal reçu comportant des séquences,
- estimer la fonction de transfert du canal en comparant une séquence reçue avec une réplique connue localement de ladite séquence,
- calculer l'inverse de la fonction de transfert,
- calculer la transformée de Fourier inverse de la fonction de transfert inverse pour obtenir une réponse impulsionnelle inverse,
- sélectionner des échantillons de la réponse impulsionnelle inverse et les transférer dans l'égaliseur en tant que coefficients de pondération.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent:

Figure 1: un schéma d'un système de transmission numérique selon l'invention.
Figure 2: un schéma d'un modulateur OFDM destiné à effectuer une émission sur multiporteuses.
Figure 3: un schéma d'un démodulateur OFDM.
Figure 4: un diagramme de répartition des symboles sur une période de temps NTc.
Figure 5: un organigramme des étapes du procédé pour le calcul des coefficients de pondération.
Figures 6A à 6F: six courbes montrant des allures de réponses impulsionnelles pour différentes étapes du déroulement du procédé.
Figure 7: un schéma d'un mode de réalisation des moyens de calcul pour mettre à jour les coefficients de pondération de l'égaliseur.
Figure 8: un schéma de la mise en cascade d'un égaliseur semi-fixe adapté au canal et d'un égaliseur adaptatif s'adaptant au bruit.
Figure 9: un schéma de l'égaliseur semi-fixe.
Figure 10: un schéma partiel de l'égaliseur adaptatif.

L'invention concerne un système de transmission à multiporteuses pour lequel les messages à transmettre sont répartis sur plusieurs porteuses pour réduire les risques d'erreurs liées aux imperfections, parfois sélectives, des canaux de transmission. A titre d'exemple, la description qui va suivre concerne le cas d'une modulation dite à répartition multiplexée de fréquences orthogonales (OFDM en langue anglaise). Pour simplifier l'écriture, le sigle OFDM sera utilisé dans la suite de la description. D'autres types de transmission à multiporteuses peuvent être utilisés.

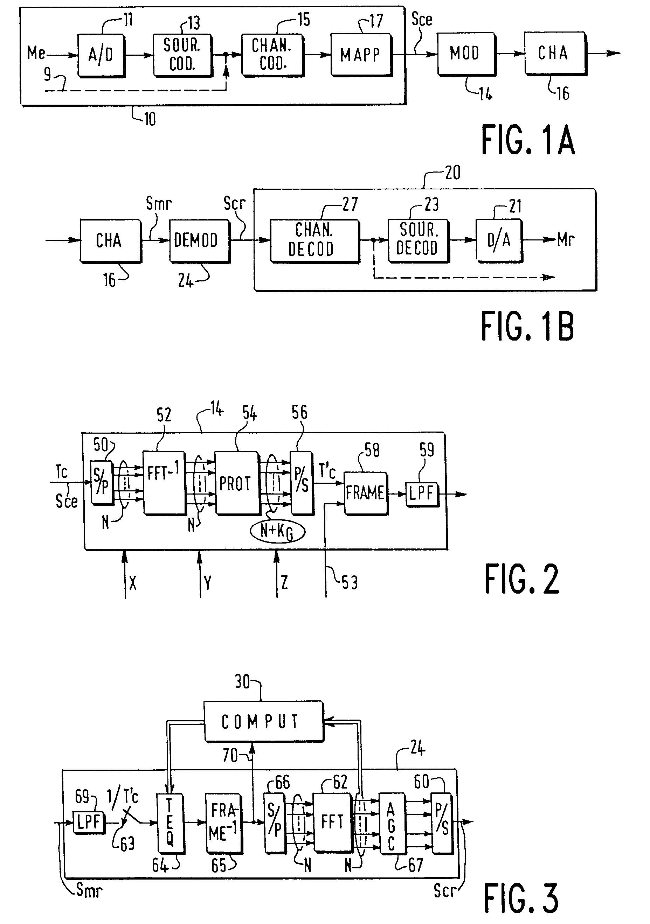

Un système classique de transmission numérique est représenté sur la figure 1. L'émetteur comprend en série (figure 1-A):

- des moyens 10 pour coder des messages Me à émettre et pour les transformer en symboles Sce d'une constellation,
- et des moyens de modulation 14 qui modulent des porteuses par les données numériques, en bande de base, représentant les symboles. L'émission est ensuite effectuée selon les techniques connues sur le canal CHA 16.

Les moyens 10 pour coder le message Me peuvent comprendre en série :

- des moyens 11 de conversion analogique-numérique A/D, qui peuvent être suivis d'un codeur de source 13 SOUR COD,
- un codeur de canal 15 CHAN COD,

- et un organe 17 d'affection MAPP des données binaires dans une ou plusieurs constellations selon la porteuse considérée.

Il peut s'agir de constellations MAQ, QPSK, BPSK ou autres. Les codeurs de source 13 et de canal 15 peuvent ne pas exister selon les caractéristiques du canal de communication. De même le convertisseur A/D 11 et le codeur de source 13 peuvent ne pas exister si le message Me est disponible sous une forme numérisée (connexion 9). Par contre, le convertisseur existe, par exemple, dans le cas des messages vocaux pour des communications téléphoniques.

Le récepteur comprend (figure 1B) :

- des moyens 24 de démodulation pour extraire les données numériques, en bande de base, représentant les symboles codés reçus Scr,
- des moyens 20 pour décoder des messages reçus Mr à partir des symboles codés reçus Scr en effectuant des opérations inverses de celles effectuées à l'émission par les moyens 10.

Les moyens 20 comprennent en série des moyens 27 de décodage de canal CHAN DECOD, des moyens 23 de décodage de source SOUR DECOD et des moyens 21 de conversion numérique-analogique D/A. Ces moyens existent dans la mesure où les codages inverses ont été préalablement effectués à l'émission.

L'invention concerne les moyens 24 de démodulation pour récupérer avec un faible taux d'erreurs les symboles émis par l'émetteur.

Plus généralement le système de transmission peut être formé d'une station émettrice/réceptrice communiquant avec une ou plusieurs stations émettrices/réceptrices. Une station émettrice/réceptrice comporte alors un émetteur et un récepteur tels que décrits ci-dessus.

La figure 2 est un exemple de schéma de principe d'une partie des moyens de modulation 14 comportant un modulateur OFDM. Les données numériques représentant les symboles Sce codés à émettre, générés à la cadence 1/Tc (un bloc dure NTc secondes), subissent une transformation série-parallèle dans un bloc 50. Les données parallélisées entrent dans un organe 52 de calcul d'une transformée de Fourier inverse $FFT^{-1}$ d'ordre N qui délivre N sorties en parallèle.

A un instant donné les N sorties en parallèle forment une partie d'un bloc de données OFDM. Un dispositif 54 ajoute à cette partie de bloc de données, des données correspondant à un intervalle de garde. Ceci consiste à recopier certaines données. Cet intervalle de garde peut ne pas exister dans certaines applications.

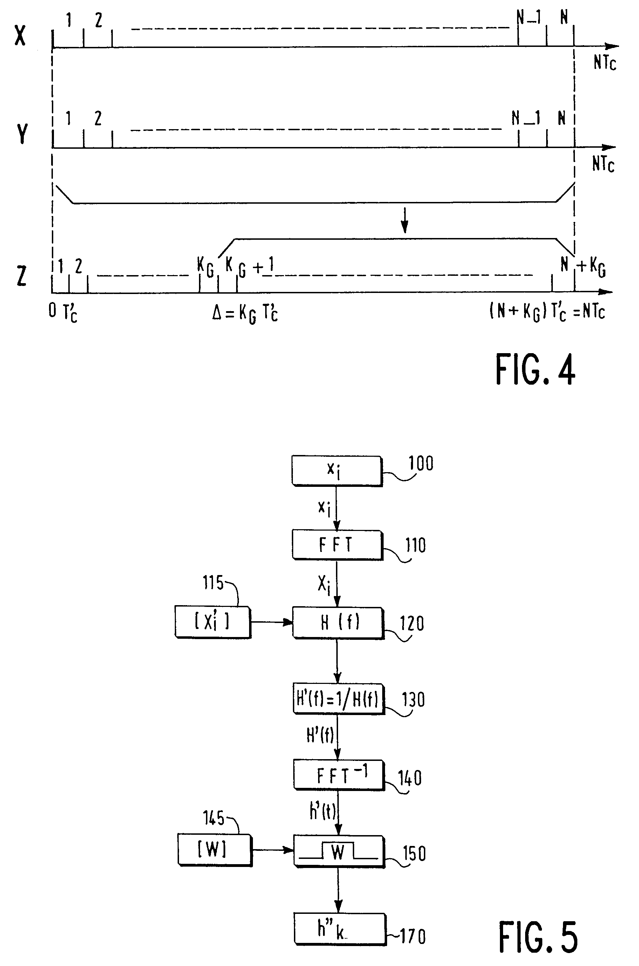

La figure 4 détaille les mécanismes mis en jeu dans la construction d'un bloc de données OFDM. Un symbole Sce est en général une valeur complexe. Le bloc 50 (figure 2) effectue une transformation série-parallèle et délivre en parallèle les N symboles (repère X) qui entrent dans le bloc 52 qui effectue une transformée de Fourier inverse d'ordre N, tel que $N = 2^J$ avec j entier. Les N symboles, qui sortent du bloc 52 (repère Y) à la cadence 1/T'c, sont à leur tour complétés par $K_G$ symboles correspondant à un intervalle de garde $\Delta = K_G.T'c$ formant protection, de telle sorte que la durée totale du bloc $(N+K_G)T'c$ reste égale à NTc. Les $K_G$ symboles correspondent à une copie des derniers symboles des N symboles précédents. Ces $K_G$ symboles sont ajoutés devant les N symboles pour constituer un bloc de données de $(K_G + N)$ symboles à émettre (repère Z). Un dispositif 56 de transformation parallèle-série effectue la sérialisation des $(K_G + N)$ symboles délivrés à la cadence 1/T'c. Les blocs successifs de $(K_G + N)$ symboles OFDM sont ensuite organisés en trame OFDM dans un dispositif 58 FRAME. Celui-ci ajoute des symboles spéciaux 53 (synchronisation, wobulation ou autres) qui servent, entre autres, à synchroniser l'émission et la réception ou à estimer le canal. Un filtre passe-bas 59 LPF filtre les signaux avant leur émission par le modulateur à multiporteuses des moyens de modulation 14.

A la réception les symboles Smr modulés reçus sont démodulés dans les moyens de démodulation 24 (figure 1) qui effectuent un traitement inverse de celui effectué à l'émission. Les moyens 24 comprennent en série (figure 3) :

- un filtre passe-bas 69,
- un échantillonneur 63 à la cadence 1/T'c,
- des moyens d'égalisation TEQ 64 opérant dans le domaine temporel,
- un dispositif $FRAME^{-1}$ 65 pour détramer les données ,
- un dispositif 66 de transformation série-parallèle qui délivre N symboles utiles et qui donc ne tient pas compte des $K_G$ symboles reçus pendant l'intervalle de garde,
- un dispositif 62 de calcul d'une transformée de Fourier directe qui délivre une suite de blocs de N symboles,
- un dispositif AGC 67 d'égalisation dans le domaine fréquentiel effectuant un contrôle de gain complexe sur chaque sous-porteuse,
- un dispositif 60 de transformation parallèle-série qui opère sur ces N symboles et qui délivre les symboles Scr codés reçus. Ces symboles Scr entrent dans les moyens de décodage 20 (figure 1-B).

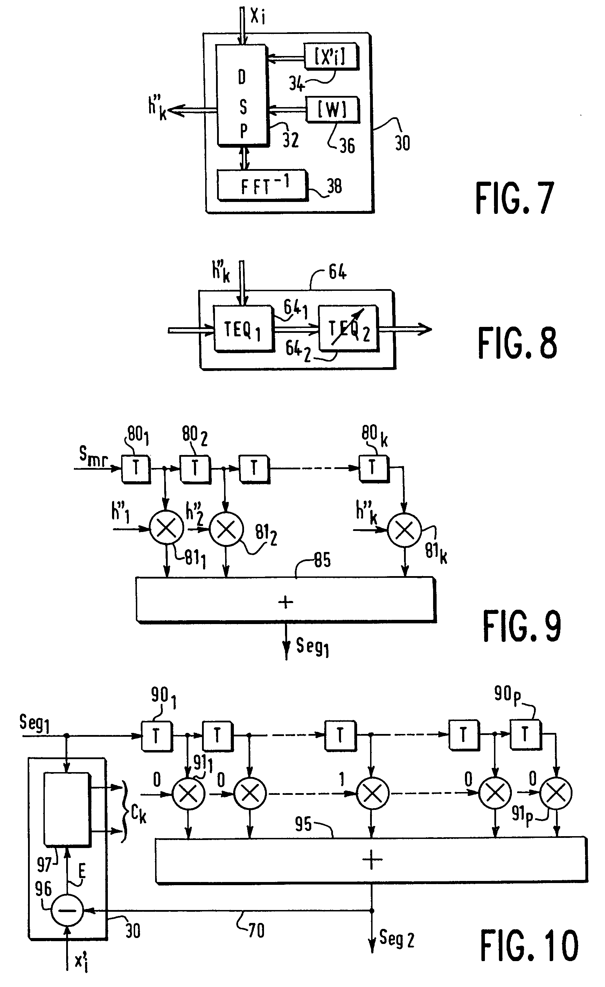

Selon l'invention, les moyens d'égalisation 64 du récepteur comportent alors un égaliseur semi-fixe $64_1$ pour corriger les imperfections dues au canal et un égaliseur adaptatif $64_2$ pour corriger les imperfections dues au bruit (figure 8). Pour déterminer les caractéristiques de l'égaliseur semi-fixe, le récepteur comprend des moyens de calcul COMPUT 30 destinés, entre autres choses, à calculer et à mettre à jour les coefficients de pondération de l'égaliseur semi-fixe de telle sorte que sa fonction de transfert soit sensiblement l'inverse de la fonction de transfert du canal.

Pour certains systèmes de transmission, cette mise à jour peut être effectuée à l'initialisation dès la mise en connexion du récepteur avec l'émetteur. Pour d'autres systèmes de transmission, un émetteur peut communiquer avec plusieurs récepteurs. Dans ce cas, le récepteur lors de sa connexion ne reçoit pas immédiatement une séquence d'initialisation mais il doit attendre des séquences de contrôle que l'émetteur émet de temps à autre.

Les caractéristiques de l'égaliseur semi-fixe $64_1$ opérant dans le domaine temporel sont déterminées pour inverser les caractéristiques du canal. Ainsi la mise en série du canal réel et de l'égaliseur semi-fixe se ramène à un canal équivalent de réponse unité. Or le canal réel peut évoluer au cours du temps. Par exemple, le nombre d'unités périphériques connectées à une même ligne téléphonique ou bien les conditions météorologiques dans le cas d'une réception hertzienne peuvent évoluer au cours du temps. La fonction de transfert du canal s'en trouve de ce fait affectée. Il faut donc de temps à autre, préférentiellement périodiquement, recalculer les caractéristiques du canal pour en déduire les caractéristiques de l'égaliseur semi-fixe.

Cette mise à jour est effectuée selon le diagramme de la figure 5. Par souci de clarté, on désignera par la suite le domaine temporel par des lettres minuscules et le domaine fréquentiel par des lettres majuscules. Lors de la connexion du récepteur, les coefficients de pondération de l'égaliseur semi-fixe ne sont pas a priori, corrects. De ce fait, au début de la procédure, le système commence par neutraliser l'égaliseur semi-fixe en le rendant transparent aux données d'entrée c'est-à-dire qu'il transmet sans changements le signal reçu. La procédure de calcul des coefficients est effectuée sur des séquences connues soit d'initialisation soit de contrôle. Elles donnent lieu à l'entrée du récepteur à des séquences reçues $x_i$. Celles-ci (bloc 100) arrivent sur un dispositif de transformée de Fourier (bloc 110) sans être altérées par l'égaliseur. Les séquences $x_i$ du domaine temporel sont ainsi transformées en données $X_i$ dans le domaine fréquentiel. Des répliques $X'_i$ des séquences, soit d'initialisation soit de contrôle, sont stockées dans le récepteur (bloc 115). En comparant (bloc 120) la séquence reçue $X_i$ et la réplique $X'_i$ correspondante stockée dans le récepteur, les moyens de contrôle déterminent la fonction de transfert H(f) du canal. Celle-ci est déterminée sur un nombre discret de fréquences, préférentiellement pour les fréquences des porteuses utilisées. La fonction de transfert H(f) est inversée (bloc 130) pour donner une fonction de transfert inverse $H'(f)$ telle que :

$$H'(f) = 1/H(f).$$

La fonction de transfert inverse $H'(f)$ est transformée dans le domaine temporel en effectuant une transformée de Fourier inverse (bloc 140) pour délivrer une réponse impulsionnelle inverse $h'(t)$. Celle-ci est alors soumise à une troncature pour en réduire sa longueur. Pour cela, les moyens de calcul stockent (bloc 145) une fenêtre W qui définit la longueur que l'on souhaite donner à la réponse impulsionnelle $h'(t)$. La troncature est effectuée par une opération de multiplication (bloc 150) combinée avec une opération de maximisation de l'énergie relative à la partie de réponse impulsionnelle située dans la fenêtre W. On peut, par exemple, vouloir limiter la réponse impulsionnelle à 128 échantillons. On prend donc une fenêtre de W=128 échantillons, on calcule l'énergie de la partie de réponse située dans la fenêtre, et on fait glisser la fenêtre W pour balayer l'ensemble de la réponse impulsionnelle $h'(t)$. La partie de réponse impulsionnelle qui contient l'énergie maximale est ainsi déterminée. Les échantillons $h''_k$ qui la composent (domaine discret) sont ainsi sélectionnés pour être chargés dans l'égaliseur semi-fixe.

Cette procédure est effectuée lors de la connexion du récepteur avec l'émetteur. Elle peut également être effectuée en cours de connexion pour tenir compte des évolutions du canal de transmission.

La fenêtre W peut présenter des flancs abrupts ou des flancs adoucis. De la sorte, la fenêtre intervient non seulement sur le nombre, mais aussi sur les amplitudes des coefficients de pondération. Ainsi on peut améliorer la fonction de transfert de l'égaliseur, en soumettant la partie de réponse impulsionnelle sélectionnée (énergie maximale) à l'action d'une fenêtre ayant des flancs adoucis pour réaliser une opération de lissage.

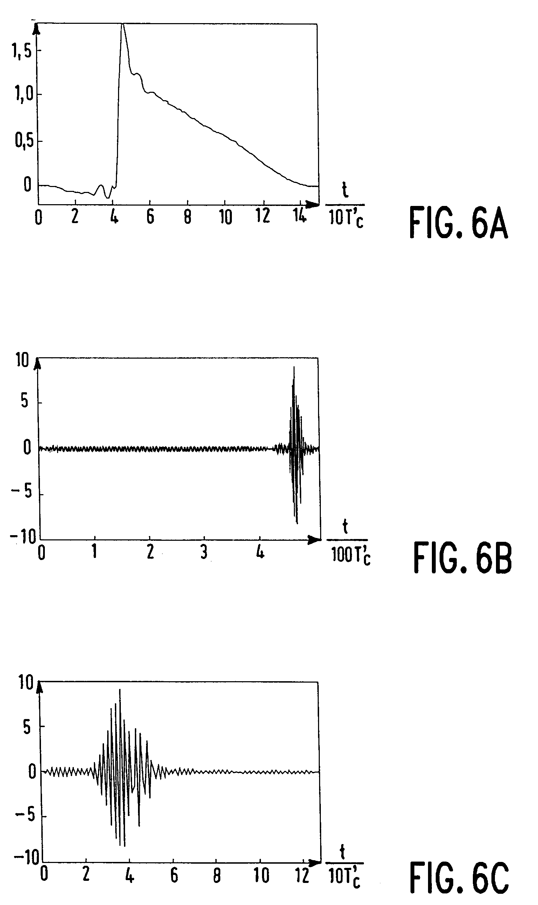

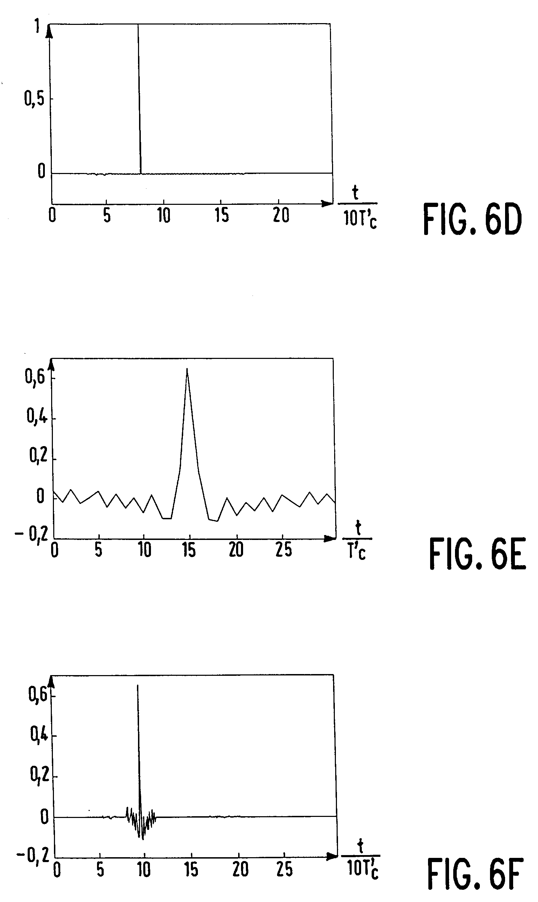

A titre d'exemple, les figures 6A à 6F montrent des courbes obtenues à différentes étapes du procédé. La figure 6A donne un exemple de réponse impulsionnelle de canal h(t) qui se prolonge sur une longue durée. La figure 6B donne la réponse impulsionnelle inverse $h'(t)$ du canal obtenue en sortie de la transformée de Fourier inverse. La figure 6C correspond à la figure 6B après l'opération de fenêtrage combinée à un décalage temporel. La figure 6D correspond au produit de convolution $h'(t)*h(t)$ de la réponse impulsionnelle h(t) de la figure 6A par la réponse impulsionnelle inverse $h'(t)$ de la figure 6C. La figure 6D représente donc la réponse à une impulsion de Dirac du canal mis en série avec l'égaliseur semi-fixe. On peut observer qu'il existe un pic élevé avec de chaque côté de petites ondulations révélant de légères irrégularités d'égalisation. Ces imperfections sont considérées comme du bruit et à ce titre sont prises en charge par l'égaliseur adaptatif. En utilisant un égaliseur adaptatif ayant la réponse impulsionnelle de la figure 6E, la convolution du signal représenté sur la figure 6D avec la réponse impulsionnelle de la figure 6E fournit le signal de la figure 6F. On peut observer que les irrégularités éloignées du pic central sont réduites ce qui indique une amélioration de l'égalisation dans cette zone. Par contre d'autres imperfections sont apparues au pied du pic, mais elles se situent temporellement dans une partie du signal qui est incluse dans l'intervalle de garde dans le cas de la technique OFDM et à ce titre ne sont pas gênantes.

Pour mettre en oeuvre le procédé décrit, il est nécessaire d'effectuer d'abord une transformée de Fourier directe puis une transformée de Fourier inverse. Or dans un système de transmission à multiporteuses (figure 3), des moyens FFT pour effectuer un transformée de Fourier directe sont nécessaires pour traiter les signaux reçus. Pour cette raison, on préfère ne pas dupliquer les moyens effectuant la transformée de Fourier et utiliser les moyens FFT que renferme le récepteur. L'entrée des moyens de calcul 30 est donc connectée en sortie des moyens FFT déjà existants.

La figure 7 représente un schéma des moyens de calcul 30 permettant d'effectuer les étapes décrites sur la figure 5. Les moyens de calcul 30 comprennent :

- des moyens 34 pour stocker une réplique $X'_i$ de la séquence d'initialisation ou de la séquence de contrôle (ou plusieurs répliques de plusieurs séquences),
- des moyens 36 pour stocker les paramètres de la fenêtre W,
- des moyens 38 pour effectuer une transformée de Fourier inverse $FFT^{-1}$,
- des sous-moyens de calcul 32 pour recevoir les séquences reçues $X_i$ par le récepteur, pour délivrer les coefficients de pondération $h''_k$ mis à jour, pour effectuer les opérations de comparaison de $X_i$ avec $X'_i$, les opérations d'inversion de H(f) en 1/H(f), les opérations de multiplication de h'(t) par la fenêtre W.

Les sous-moyens de calcul 32 sont par exemple constitués d'un calculateur ou d'un processeur numérique du signal DSP.

Lorsque les coefficients de pondération mis à jour ont été transférés dans l'égaliseur semi-fixe, celui-ci présente alors une fonction de transfert inverse de celle du canal. L'égaliseur corrige ainsi les imperfections dues au canal lui-même, le canal n'évoluant que lentement à la cadence des modifications du réseau par l'arrivée ou la disparition des prises de connexion. Les imperfections de transmission propres au canal sont ainsi compensées. Néanmoins dans des conditions réelles d'exploitation, d'autres imperfections de nature dynamique sont créées par du bruit superposé. Pour corriger ces imperfections évoluant trop rapidement pour être prises en compte par l'égaliseur semi-fixe, on place en série avec l'égaliseur semi-fixe un égaliseur adaptatif de type classique qui opère selon les algorithmes connus d'égalisation.

La figure 9 donne un exemple de réalisation de l'égaliseur semi-fixe. Il comporte plusieurs cellules à décalage $80_1$ à $80_k$ dans lesquelles circule le signal $S_{mr}$ échantillonné à égaliser. La sortie de chaque cellule est réunie à une entrée d'un multiplieur $81_1$ à $81_k$ ayant une autre entrée réunie aux coefficients de pondération sélectionnés $h''_1$ à $h''_k$. Les sorties des multiplieurs sont réunies à un sommateur 85 qui délivre un signal égalisé $S_{eg1}$. Les coefficients de pondération sont mis à jour de temps à autre selon la procédure décrite précédemment. Le signal égalisé $S_{eg1}$ entre ensuite dans l'égaliseur adaptatif d'un type classique dont un exemple est représenté sur la figure 10. Il comporte plusieurs cellules à décalage $90_1$ à $90_p$ dans lesquelles circule le signal $S_{eg1}$ à égaliser. La sortie de chaque cellule est réunie à une entrée d'un multiplieur $91_1$ à $91_p$ ayant une autre entrée réunie à des coefficients de pondération $C_k$. Les sorties des multiplieurs sont réunies à un sommateur 95 qui délivre un signal égalisé $S_{eg2}$. Pour calculer les coefficients de pondération de l'égaliseur adaptatif, les moyens de calcul COMPUT 30 comportent des moyens de comparaison 96 et des sous-moyens de calcul 97. Les moyens de comparaison 96 comparent la séquence de référence $x'_i$ avec les séquences correspondantes comprises dans le signal $S_{eg2}$ (connexion 70). Le résultat de la comparaison fournit un signal d'erreur E qui entre dans les sous-moyens de calcul 97 appliquant un algorithme de calcul des coefficients de pondération $C_k$ de l'égaliseur adaptatif en prenant également en compte le signal $S_{eg1}$. Cet algorithme peut être l'algorithme du gradient qui minimise l'erreur quadratique moyenne. Les coefficients ainsi déterminés sont mis à jour adaptativement. Pour initialiser l'égaliseur adaptatif au début de sa mise en fonctionnement, préférentiellement on donne au coefficient central une certaine valeur, par exemple une valeur 1, et on donne aux autres coefficients une valeur zéro. L'égaliseur adaptatif a ainsi une structure symétrique qui lui permet de converger plus rapidement. Toute autre distribution des coefficients convient également.

## Revendications

1. Système de transmission numérique comportant un émetteur et au moins un récepteur qui communiquent entre eux à travers un canal, l'émetteur émettant des signaux à multiporteuses, le récepteur comportant des moyens d'égalisation ayant au moins un égaliseur et des moyens de calcul pour mettre à jour des coefficients de pondération de l'égaliseur, caractérisé en ce que l'égaliseur est un égaliseur semi-fixe pour lequel les moyens de calcul estiment une fonction de transfert inverse d'une fonction de transfert caractérisant le canal, les moyens de calcul déterminant, à partir de la fonction de transfert inverse, les coefficients de pondération pour mettre à jour, de temps à autre, l'égaliseur semi-fixe.

2. Système selon la revendication 1 caractérisé en ce que les moyens d'égalisation comportent, après l'égaliseur semi-fixe, un égaliseur adaptatif pour égaliser des imperfections de transmission créées par un bruit superposé.

3. Système selon les revendications 1 ou 2 caractérisé en ce que les moyens de calcul sélectionnent les coefficients de pondération en effectuant une opération de fenêtrage de la fonction de transfert inverse pour contenir temporellement des défauts d'égalisation sur une durée réduite prédéterminée.

4. Système selon la revendication 3 caractérisé en ce que les moyens de calcul stockent des répliques de séquences d'initialisation et/ou de séquences de contrôle ayant une composition connue à l'avance émises par l'émetteur, les moyens de calcul estiment la fonction de transfert du canal en comparant des séquences reçues avec les répliques stockées.

5. Système selon la revendication 4 caractérisé en ce que les séquences sont émises selon un format dit à répartition multiplexée de fréquences orthogonales comportant un intervalle de garde, la durée réduite étant celle de l'intervalle de garde.

6. Récepteur de signaux numériques à multiporteuses transmis sur un canal, le récepteur comportant des moyens d'égalisation ayant au moins un égaliseur et des moyens de calcul pour mettre à jour des coefficients de pondération de l'égaliseur, caractérisé en ce que l'égaliseur est un égaliseur semi-fixe pour lequel les moyens de calcul estiment une fonction de transfert inverse d'une fonction de transfert caractérisant le canal, les moyens de calcul déterminant, à partir de la fonction de transfert inverse, les coefficients de pondération pour mettre à jour, de temps à autre, l'égaliseur semi-fixe.

7. Récepteur selon la revendication 6 caractérisé en ce que les moyens d'égalisation comportent, après l'égaliseur semi-fixe, un égaliseur adaptatif pour égaliser des imperfections de transmission créées par un bruit superposé.

8. Récepteur selon les revendications 6 ou 7 caractérisé en ce que les moyens de calcul sélectionnent les coefficients de pondération en effectuant une opération de fenêtrage de la fonction de transfert inverse pour contenir temporellement des défauts d'égalisation sur une durée réduite prédéterminée.

9. Récepteur selon la revendication 8 caractérisé en ce que les moyens de calcul stockent des répliques de séquences d'initialisation et/ou de séquences de contrôle ayant une composition connue à l'avance émises par l'émetteur, les moyens de calcul estiment la fonction de transfert du canal en comparant des séquences reçues avec les répliques stockées.

10. Récepteur selon la revendication 9 caractérisé en ce que les séquences sont émises selon un format dit à répartition multiplexée de fréquences orthogonales comportant un intervalle de garde, la durée réduite étant celle de l'intervalle de garde.

11. Procédé mis en oeuvre dans un système de transmission numérique comportant un émetteur et au moins un récepteur qui communiquent entre eux à travers un canal, l'émetteur émettant des signaux à multiporteuses, le récepteur comportant des moyens d'égalisation ayant au moins un égaliseur et des moyens de calcul pour mettre à jour des coefficients de pondération de l'égaliseur caractérisé en ce que le procédé comprend les étapes suivantes:

- initialiser l'égaliseur pour qu'il transfère, sans changements, un signal reçu comportant des séquences,
- estimer la fonction de transfert du canal en comparant une séquence reçue avec une réplique connue localement de ladite séquence,
- calculer l'inverse de la fonction de transfert,
- calculer la transformée de Fourier inverse de la fonction de transfert inverse pour obtenir une réponse impulsionnelle inverse,
- sélectionner des échantillons de la réponse impulsionnelle inverse et les transférer dans l'égaliseur en tant que coefficients de pondération.

12. Procédé selon la revendication 11, caractérisé en ce que l'étape de sélection des échantillons est faite à l'aide d'une opération de fenêtrage en calculant, par glissement d'une fenêtre, une valeur maximale d'une fonction de coût mesurant une énergie des échantillons contenus dans la fenêtre, la fenêtre agissant sur le nombre et/ou les amplitudes des coefficients de pondération.

**FIG. 1A**

Me → A/D (11) → SOUR. COD. (13) → CHAN. COD. (15) → MAPP (17) → Sce → MOD (14) → CHA (16)

10

9

**FIG. 1B**

CHA (16) → Smr → DEMOD (24) → Scr → CHAN. DECOD (27) → SOUR. DECOD (23) → D/A (21) → Mr

20

**FIG. 2**

Tc / Sce → S/P (50) → FFT⁻¹ (52) (14) → PROT (54) → P/S (56) → T'c → FRAME (58) → LPF (59)

N N N+K_G

X Y Z 53

**FIG. 3**

COMPUT (30)

70 24

Smr → LPF (69) → 1/T'c (63) → TEQ (64) → FRAME⁻¹ (65) → S/P (66) → FFT (62) → AGC → P/S (60) → Scr

N N 67

FIG. 4

FIG. 5

FIG. 6A

FIG. 6B

FIG. 6C

FIG. 6D

FIG. 6E

FIG. 6F

FIG. 7

FIG. 8

FIG. 9

FIG. 10

EP 0 734 133 A1

Office européen
des brevets

**RAPPORT DE RECHERCHE EUROPEENNE**

Numero de la demande

EP 96 20 0684

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | PROCEEDINGS OF THE INTERNATIONAL CONFERENCE ON COMMUNICATIONS, 23 Mai 1993, NEW YORK, US, pages 761-765, XP000568238 CHOW ET AL: "EQUALIZER TRAINING ALGORITHMS FOR MULTICARRIER MODULATION SYSTEMS" * page 762, colonne de gauche, alinéa 6 * * page 762, colonne de gauche, alinéa 8 - colonne de droite, alinéa 1 * * page 763, colonne de gauche, alinéa 3 * * page 763, colonne de gauche, alinéa 6 - colonne de droite, alinéa 1 * * page 763, colonne de droite, alinéa 2 * --- | 1-12 | H04L5/06 H04L27/01 |
| X | PROCEEDINGS OF THE IEEE GLOBAL TELECOMMUNICTIONS CONFERENCE 1993, 29 Novembre 1993 - 2 Décembre 1993, NEW YORK, US, pages 1723-1728, XP000436106 CHOULY ET AL.: "Orthogonal multicarrier techniques applied to direct sequence spread spectrum CDMA systems" * page 1725, colonne de droite, alinéa 3 - alinéa 4 * --- | 1-12 | |
| A | EP-A-0 499 560 (FRANCE TELECOM) * abrégé * * page 2, ligne 44 - ligne 47 * * page 3, ligne 22 - ligne 29 * * page 5, ligne 28 - page 6, ligne 16 * * page 6, ligne 36 - ligne 40 * --- | 1-12 | DOMAINES TECHNIQUES RECHERCHES (Int.Cl.6) H04L |
| A,D | WO-A-93 26096 (LELAND STANFORD JUNIOR UNIVERSITY) * abrégé * --- -/-- | 1-12 | |

Le présent rapport a été établi pour toutes les revendications

| Lieu de la recherche | Date d'achèvement de la recherche | Examinateur |
|---|---|---|
| LA HAYE | 8 Juillet 1996 | Scriven, P |

EP 0 734 133 A1

Office européen
des brevets

**RAPPORT DE RECHERCHE EUROPEENNE**

Numero de la demande

EP 96 20 0684

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | IEEE COMMUNICATIONS MAGAZINE, vol. 28, no. 5, NEW YORK, US, pages 5-8, 14, XP000132491 BINGHAM: "MULTICARRIER MODULATION FOR DATA TRANSMISSION: AN IDEA WHOSE TIME HAS COME" * page 11, colonne de gauche, alinéa 5 * --- | 1-12 | |
| A | PROCEEDINGS OF THE GLOBAL TELECOMMUNICATIONS CONFERENCE, 28 Novembre 1994, NEW YORK, US, pages 1884-1888, XP000488847 AL-DHAHIR & CIOFFI: "OPTIMUM FINITE-LENGTH EQUALIZATION FOR MULTICARRIER TRANSCEIVERS" * abrégé; figure 1 * * page 1885, colonne de gauche, alinéa 3 * ----- | 1-12 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 8 Juillet 1996 | Scriven, P |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)